# EUROPEAN PATENT APPLICATION

(11) **EP 2 897 367 A1**
(43) Date of publication of application: **22.07.2015**
(21) Application number: 15151618.4
(22) Date of filing: 19.01.2015
(51) Int. Cl.: H04N 21/231, H04N 21/2343, H04N 21/658

(54) **Methods and systems of storage level video fragment management**

(30) Priority: 19.01.2014 US 201461929073 P
(71) Applicant: Fabrix TV Ltd, 4365707 RaAnana (IL)
(72) Inventor: Drang, Nir, 4526432 Hod-HaSharon (IL); Ben-Yakir, Ram, 4660639 Herzlia (IL); Ben-Shmuel, Nir, 4481300 Oranit (IL); Amiaz, Tomer, 6949402 Tel-Aviv (IL); Gonen, Eran, 4465301 Kfar-Saba (IL)
(74) Representative: Dennemeyer & Associates S.A.

(57) **Abstract**

A method of processing video data. During a preprocessing stage a plurality of video content datasets in a storage network node, the method calculates coefficient data and encoding decisions of said video content dataset on a per frame basis, said encoding decisions comprising at least some of frame sizes, motion vectors, macroblock quantizers and macroblock layouts partitions (geometry), deleting said coefficient data; storing said encoding decisions in an auxiliary file associated with said video content dataset; during an operative stage: receiving from a client terminal via a communication network a request for streaming a first of said plurality of video content datasets; identifying a respective said auxiliary file associated with said first video content dataset; and utilizing said encoding decisions from said respective auxiliary file to recalculate said coefficient data of said first video content dataset without recalculating a respective said encoding decisions.

## Description

### BACKGROUND

The present invention, in some embodiments thereof, relates to video streaming and, more specifically, but not exclusively, to methods and systems of storing and retrieving video data on a server.

Video streaming is becoming an increasingly popular consumer activity causing greater demand on server systems and networks. The increase in the consumer market of electronic devices, including different sized screens and device capabilities requires significant storage for video in different formats and video profiles.

Video profiles may describe a set of video encoding characteristics, for example, resolution, bit-rate, aspect ratio, flexible macroblock ordering, redundant slices, arbitrary slice ordering, data partitioning, B-slices, and quantization scale matrices. Video profiles may also describe use of a video encoding algorithm such as Motion Pictures Expert Group version 2 (MPEG2), H.264, H.265, and VP8. Video profiles typically match to a specific device or device group. These devices or device groups may be for example, mobile phones, Smart Televisions, consumer set-top-boxes, laptops/Personal Computers (PC's), or tablets.

Current video streaming programs may use systems which combine multiple video layers to create the highest quality video playback. Client devices may request certain of these layers, as appropriate for the device and/or connection speed. These devices, using adaptive streaming, may switch between multiple renditions and layers, all while expecting to have no visible artifacts while being viewed in real-time. Adaptive streaming is very popular for Over The Top (OTT) video service providers.

This works great with what is known in the art as pull-mode streaming, where the client requests video from the video server and/or the Hyper Text Transfer Protocol (HTTP) server. Multiple renditions may be streamed in either pull-mode or push-mode for example to retrieve different resolutions as well as types of video profiles. There is a problem in the art, therefore where storing and maintaining several renditions or formats of many videos requires significant storage capacities, as well as large demands for storage write and read input and output requests. Finally, future compatibilities of new devices and video types must be accounted for in management of video storage servers.

### SUMMARY

According to some embodiments of the present invention there is provided a method of processing video data. The method comprises during a preprocessing stage, for each of a plurality of video content datasets in a storage network node: calculating accordingly coefficient data and encoding decisions of said video content dataset on a per frame basis, said encoding decisions comprising at least some of frame sizes, motion vectors, macroblock quantizers and macroblock layouts partitions (geometry); deleting said coefficient data; storing said encoding decisions in an auxiliary file associated with said video content dataset; during an operative stage: receiving from a client terminal via a communication network a request for streaming a first of said plurality of video content datasets; identifying a respective said auxiliary file associated with said first video content dataset; and utilizing said encoding decisions from said respective auxiliary file to recalculate said coefficient data of said first video content dataset without recalculating a respective said encoding decisions.

Optionally, the method further comprises, wherein said preprocessing stage further comprises creating a map detailing which video content datasets have coefficient data deleted, and storing said map in said auxiliary file.

Optionally, the method further comprises wherein said operative stage further includes looking up a byte range in the map to locate a storage address of the requested video content dataset.

Optionally, the method comprises, wherein said preprocessing stage further comprises, storing coefficient data for video content datasets which are at received time locations bookmarked by a user.

Optionally, the method comprises, wherein said preprocessing stage further comprises, storing coefficient data for video content datasets which are determined to be likely to be played, the determination based on statistics gathered when at least one of: the video content dataset is requested to be played out of sequence and the video content dataset are different in a bitwise domain.

Optionally, the method further comprises, wherein recalculating said coefficient data step further comprises breaking down the video content datasets to smaller sets prior to recalculating said coefficient data and processing each smaller set in parallel, on a different storage node.

Optionally, the method further comprises, wherein said calculating further comprises transcoding the video content datasets to different video profiles, according to rules in a locally stored storage policy, said storage policy dictating which transcoded video content datasets should be stored and a storage period for said transcoded video content datasets which are to be stored.

Optionally, the method further comprises: creating an auxiliary file with encoding decisions supplied by an external encoder; utilizing the encoding decisions supplied by the external encoder to recalculate the coefficient data of the first video content dataset without recalculating the respective encoding decisions; and deleting said first video content dataset.

Optionally, the method further comprising, compressing the auxiliary file, the auxiliary file containing encoding context information.

Optionally, the method further comprises, wherein the video content dataset is a group of pictures.

Optionally, the method further comprises, wherein the request is for a portion of the video.

According to some embodiments of the present invention there is provided a system to process video data comprising: a server configured to; during a preprocessing stage for each of a plurality of video content datasets in a storage network node: calculate accordingly coefficient data and encode decisions of said video content dataset on a per frame basis, said encoding decisions comprising at least some of frame sizes, motion vectors, macroblock quantizers and macroblock layouts partitions (geometry); delete said coefficient data; and a storage device configured to: store said encoding decisions in an auxiliary file associated with said video content dataset; wherein during an operative stage said server: receives from a client terminal via a communication network a request for streaming a first of said plurality of video content datasets; identifies a respective said auxiliary file associated with said first video content dataset; and utilizes said encoding decisions from said respective auxiliary file to recalculate said coefficient data of said first video content dataset without recalculating a respective said encoding decisions.

According to some embodiments of the present invention there is provided a method of streaming video data, comprising: storing in a streaming server a manifest mapping a plurality of video fragments to a plurality of storage addresses in a storage of a network node connected to said streaming server via a computer network; storing a first group of said plurality of video fragments as a plurality of renditions ready files in some of said plurality of storage addresses and storing instructions for transcoding a second group of said plurality of video fragments in other of said plurality of storage addresses; receiving a request to stream one of said plurality of video fragments; accessing said manifest at said streaming server to retrieve a first of said plurality of storage addresses; when said first storage address includes a first of said plurality of renditions ready files: streaming said first renditions ready file without decompression from said streaming, and when said first storage address includes respective said instructions for transcoding: executing said respective instructions for transcoding to generate a new renditions ready dataset and streaming said new renditions ready dataset from said streaming server.

Optionally, the method further comprises instructions for transcoding include instructions to: identify an auxiliary file containing a set of encoding decisions; use said set of encoding decisions in said auxiliary file to regenerate coefficient data in the transcoding of said new renditions ready dataset without recalculating respective said encoding decisions.

Optionally, the method further comprises, wherein said encoding decisions are generated on a per frame basis of the second group of said plurality of video fragments, and comprise at least some of frame sizes, motion vectors, macroblock quantizers and macroblock layouts partitions for each frame.

Optionally, the method further comprises said mapping of the plurality of video fragments to a plurality of storage addresses further comprises mapping the video fragments from a same video content dataset to storage addresses of storage in multiple network nodes.

Optionally, the method further comprises wherein the manifest is updated when video fragments are erased from the storage of the network node.

Optionally, the method further comprises, wherein the new renditions ready dataset is associated with a time indicating when to be erased.

Optionally, the method further comprises, wherein the new renditions ready dataset is stored in the storage of the network node and the manifest is updated with the mapping of the new renditions ready datasets location in storage.

Optionally, the method further comprises, wherein said executing the instructions includes: retrieving bitrate and resolution codec information from fixed parameters; and dynamically selecting to prioritize either transcoding speed or quality.

Optionally, the method further comprises trasncoding the video content datasets to different video profiles, according to rules in a locally stored storage policy, said storage policy dictating which transcoded video content datasets should be stored and a storage period for said transcoded video content datasets which are to be stored.

According to some embodiments of the present invention there is provided a system to perform a method of streaming video data comprising: a processor; a memory; and a control module configured to: store in a streaming server a manifest mapping a plurality of video fragments to a plurality of storage addresses in a storage of a network node connected to said streaming server via a computer network; store a first group of said plurality of video fragments as a plurality of renditions ready files in some of said plurality of storage addresses and store instructions to transcode a second group of said plurality of video fragments in other of said plurality of storage addresses; receive a request to stream one of said plurality of video fragments; access said manifest at said streaming server to retrieve a first of said plurality of storage addresses; when said first storage address includes a first of said plurality of renditions ready files: stream said first renditions ready file without decompression from said streaming, and when said first storage address includes respective said instructions for transcoding: execute said respective instructions for transcoding to generate a new renditions ready dataset and stream said new renditions ready dataset from said streaming server.

Optionally, the method further comprises: storing a second set of encoding decisions in a second auxiliary file for said first of said plurality of video content datasets if the auxiliary file generated in the preprocessing stage is not present.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of a video streaming and storage system, according to some embodiments of the present invention;
FIG. 2 is a flowchart of a method of video fragment data creation, and later regeneration according to some embodiments of the present invention;
FIG. 3 is a schematic illustration of exemplary video files and metadata, according to some embodiments of the present invention;
FIG. 4 is an exemplary application programming interface flowchart of user request and video transmission according to prior inventions;
FIG. 5 is a flowchart of a method of dynamic real-time video fragment creation according to some embodiments of the present invention; and
FIG. 6 is an exemplary application programming interface flowchart of user request and video fragment creation according to some embodiments of the present invention.

### DETAILED DESCRIPTION

The present invention, in some embodiments thereof, relates to video streaming and, more specifically, but not exclusively, to methods and systems of storing and retrieving video data on a server.

Some embodiments of the invention enable server administrators and/or systems to save storage space required by many video versions of the same file, by dynamically transcoding video content based on previously calculated decision data. Some embodiments of the invention enable the video server to generate specific coded versions upon request in real-time using previously calculated decision data. Optionally, a reference video version is used to create a second version in another format, resolution, or bit-depth. Optionally, different video formats include MPEG2, H.264, H.265, HEVC and VP8.

According to some embodiments the video server erases other data from the transcoded file after storing the encoding decisions. Optionally, the method erases coefficient data and/or the whole file. The video server may use the metadata when trying to access the video fragment later on. Optionally, the method stores encoding decisions as metadata in an auxiliary file, and uses the decisions later to transcode during a real-time video playback request. The erasing saves storage space, and reuse of the encoding decisions also saves processing time later when the file is requested and must be transcoded again.

Optionally, the encoding decisions include instructions to adjust or create frame sizes, motion vectors, macroblock quanitizers and/or macroblock layouts. In use, after the auxiliary file is created, when a request to stream video is received, the video server extracts the encoding decisions from the metadata and uses the encoding decisions to transcode one or more fragment(s). Optionally, the real-time transcoding is a bit exact output replicating the preprocessing encoding and operates on the same reference file. Optionally, encoding decisions of an external encoder are stored and the real-time transcoding operates on a reference file different from that stored on the server. For example, when an input file to the video server is fragments A1, A2 and A3 from a source, A, then A2 and A3 are dropped and A2' and/or A3' are generated. In this example, A1 is now the reference instead of A. Therefore, new versions A2' and A3' are not the same as A2 and A3. Optionally, in preprocessing encoding offline A2' and A3' are generated, their metadata is stored and then the files are erased. Optionally, in real-time third versions, A2" and A3" are generated which are equivalent to A2' and A3'.

According to some embodiments of the present invention, there are provided methods for managing a server side manifest which maps storage location of chunks of video data of a stream. As used herein, the term manifest means a file on the server which indicates where the chunks of video data, for instance different video renditions encoded at different bit rates and sizes are stored. This manifest is distinguished from a standard, client side manifest which is based on adaptive video streaming protocols, for example a multimedia playlist M3U8 client manifest in the Http Live Streaming Internet Engineering Task Force (IETF) protocol. The method may store some video files or chunks thereof as video renditions which are ready to be played, while it may store other video files as a set of instructions for transcoding. Storing certain files as a set of instructions enables saving storage space for files as well as preserving compatibility for server file system protocols.

The method may be performed on a video server. The video server may check when a requested file has a readable file, or instructions stored upon a playback request from an end user. When the requested file has instructions stored, the server may execute the instructions in a way so as to transcode the requested file. When the file requested has an already transcoded version stored, the server may directly stream the file. Optionally, the instructions include a scripting language such as JavaScript or ActionScript. Optionally, the video server contains a scripting engine to execute the instructions to be performed in real-time.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

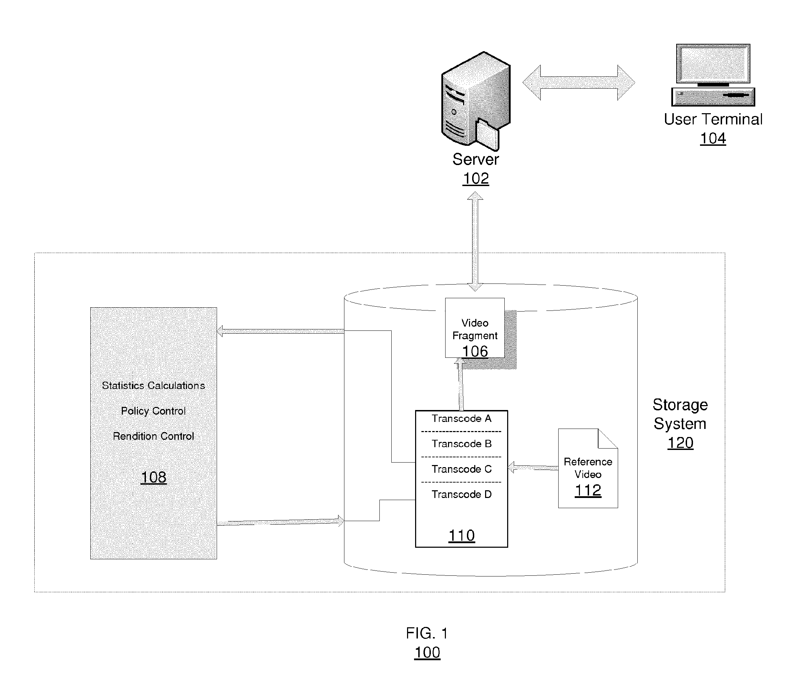

Reference is now made to FIG. 1, which is a schematic illustration of a system 100 for streaming and storing video according to some embodiments of the present invention. A User Terminal 104 may connect to a Server 102 through a network and/or locally in order to access a video or video fragment. Optionally, the network is a caching network and/or Content Delivery Network (CDN). A User Terminal 104 may be a desktop, a laptop, a mobile phone, a tablet, a wearable computing unit or another server. In some embodiments Server 102 may be a video server as previously mentioned.

According to some embodiments of the present invention there is provided a method for managing storage of videos on the video server. Optionally the video server manages videos on storage node(s) attached locally or through a network to the video server. The Server 102, may access a Storage System 120 via a storage interface, as well as through novel ones claimed in this invention. In some embodiments, Storage System 120 may be one or more storage nodes. In some embodiments, Storage System 120 may be local storage attached to Server 102 physically. Storage System 120, in some embodiments, utilizes a Reference Video 112 in order to create Transcoded Versions 110. Optionally, the generation of Transcoded Versions 110 is done via rules or policies provided by Control System 108. Optionally, the resulting Video Fragment 106 is generated as a result of the transcoding accomplished utilizing rules in Control System 118, and sent back to Server 102 and/or to User Terminal 104.

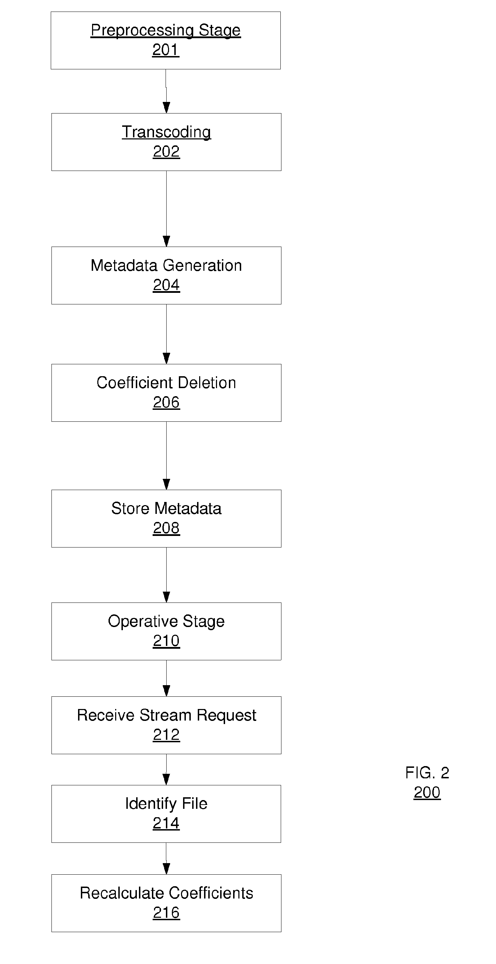

Reference is now made to FIG. 2 which is Flowchart 200 presenting a method of video fragment data creation, and later regeneration according to some embodiments of the present invention. The method enables a video server to process video fragments in a first stage where encoding decisions are stored, before receiving a streaming request. The method later enables the video server to transcode the video fragments in an operative stage when a streaming request is received, utilizing the previously calculated encoding decisions. As shown in Preprocessing Stage 201, a video server such as Server 102 may begin performing transcoding of all or some of certain video fragments and/or renditions before streaming video. Optionally, Control System 108 requests transcoding operations and processing is done in Storage System 120. For example, as shown in 202 a video server transcodes all renditions on a per frame or group of pictures basis in generation of Transcodings 110. Resultantly, in transcoding, the video server may calculate a set of coefficient data appropriate to a rendition and/or specific video profile. Additionally, as shown in 204 the video server, such as Server 102 may generate a set of data to be used later to regenerate or transcode the video fragment again. For example, the video server may generate encoding decisions such as frame sizes, motion vector data, macroblock quantizer data, and macroblock layout partition data. Optionally, this data is stored in a metadata file for the video fragment. Optionally, the video server may generate encoding decisions that account for graphics, banners, and/or logos added into the video. Optionally, the video server will add the graphics, banners, advertisements during the real-time encoding when a video request is received.

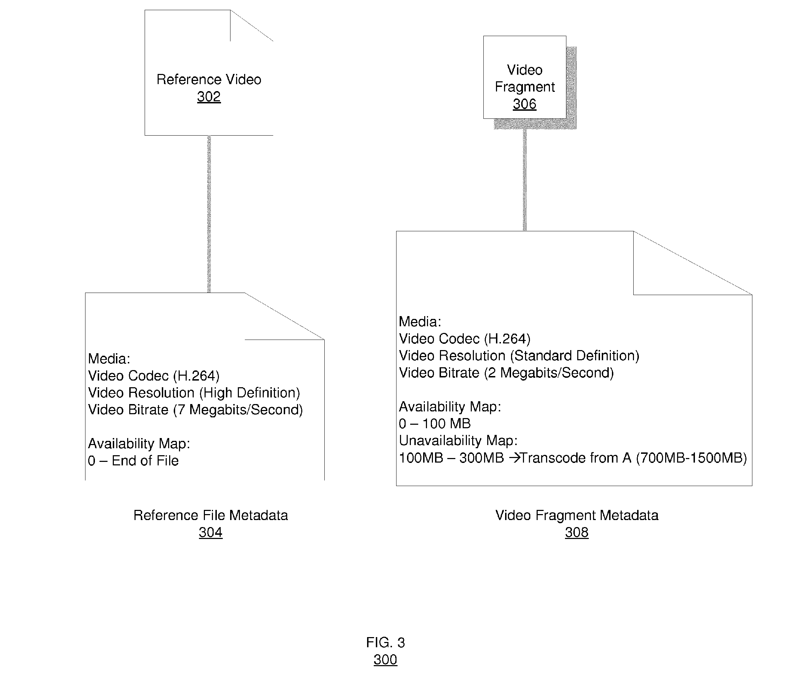

As shown in 206, the video server may delete the coefficient data that is generated during the transcoding process. Optionally, in 206, the video server deletes the video fragment file. Optionally, the coefficient data is deleted, while other decisions as mentioned are saved. This deletion may save significant quantities of disk space in cumulative effects. Optionally, as shown in 208, the video server stores some or all of the aforementioned encoding decisions as metadata in a separate file. This file may be stored as an auxiliary file and associated with a reference video file. Optionally, the auxiliary file is compressed. Optionally, the auxiliary file is stored and retrieved in storage without the need of being retrieved in the regular instruction code flow of the encoder. Reference is now made to FIG. 3, which is a schematic illustration of exemplary video files and metadata, according to some embodiments of the present invention. In exemplary embodiments of Video Files and Metadata 300, Video Fragment 306 is optionally a fragment transcoded from Reference Video 302. Reference Video 302 may be another virtual file creating a chain of linked files. In some embodiments, Video Fragment Metadata 308 may be the metadata used to generate Video Fragment 306, including certain encoding decisions. Optionally, Video Fragment Metadata 308 may be different from Reference File Metadata 304, which is the metadata associated with Reference Video File 302 in that it may include special locally encoded data based on encoding decisions done prior to transcoding in real-time.

Optionally, a video server with a reference high quality video version such as Reference Video File 302, and a different rendition such as Video Fragment 306, with a different video profile or resolution from the reference version, are added. In some embodiments, a new rendition such as Video Fragment 306 is added generically by supplying the new version to the server via regular network interfaces. Optionally, some renditions are removed. Optionally, the Server 102 is requested to generate the various new rendition(s) from the reference version such as Reference Video File 302.

As shown, 212-216 may be performed during an Operative Stage 210, which is subsequent to Preprocessing Stage 201. As shown in 212, first the video server may receive a request for streaming of certain video in certain formats or renditions. The streaming request may be received over a communication network. As shown in 214, the video server may lookup, or identify the requested file. Finally as shown in 216, the video server optionally utilizes the previously generated metadata in order to recalculate the coefficient data. For example, the video server may reuse all generated metadata such that none has to be computed again.

In some embodiments the computing techniques include several methods to save time including, parallel coding, offline policy-based memory management, and batch coding. In some embodiments the storage server dynamically chooses on a per fragment basis to instruct the encoder for fast/low quality processing versus slow/ high quality processing. In some embodiments the storage server transcodes fragments of the video during nonpeak hours also, known as offline. Optionally, the storage server deprioritizes video transcoding techniques such that transcoding operations are stopped when playback is requested by a user such as one using User Terminal 104. Optionally, the storage server prioritizes storage data so that upon read requests some Input/Outputs are more highly prioritized than other. Optionally, heterogeneous systems are implemented with some storage nodes dedicated to low latency processing. Optionally, the video server routes transcoding jobs on a per fragment basis according to latency requirements for specific fragments.

Optionally, transcoding takes on the same nodes as where storage of video fragments takes place. Optionally, transcoding takes on a video and storage infrastructure dedicated only to transcoding. Optionally a Graphics Processing Unit (GPU) and/or graphics specific processor is used. Optionally, transcoding takes place on a remote cloud infrastructure.

In some embodiments, the storage system uses metadata to determine when a file is available, or present on the server, and when the file is present, the file is transmitted using a regular and/or generic file protocol. In some embodiments, when the video is not available, or all the data for that rendition is not present, the storage system transcodes the relevant portion of the reference video using stored metadata. This transcoded version may then be transmitted via normal file interface mechanisms.

Optionally, a video server such as Server 102, may utilize the saved decisions stored in the separate file to save time when a user requests a certain file rendition. For example, a user may request a 720p MPEG4 version, of a video which is not the format of the stored reference file. In this example, an encoder on the video server, or similar networked machine may dynamically transcode a requested version and/or segment of a video taking advantage of the already made decisions. For example, an encoder on a Server 102 may receive a video request from User Terminal 104, extract Video Fragment Metadata 208, including the decision data, and use the decision data during encoding the rendition. This may be done in order to save significant transcoding time, as well as not having to maintain significant offline quantities of files. The output video would be the same exact version as that created offline, previously erased.

Optionally, the video server manages and/or updates a data structure to track versions of video files in storage. The data structure and/or map may be stored along with the encoding decisions and/or metadata of video fragments. For example, in some embodiments an API is called to update a map and/or a hash, when a new rendition is created. For example, when there is a reference version of a high resolution H.264 video, a new version or rendition of the H.264 video may either be created and/or supplied to the video server, but now in MPEG2 at a lower resolution. Once the new rendition is supplied, and/or created, the data structure tracking the availability is optionally updated. Optionally, a fully virtual rendition may be stored with parameters and/or instructions required to produce the referenced version.

In some embodiments of the invention the Reference Video File 302, of higher resolution may be stored locally on the Storage System 120. Optionally, the reference video, of higher resolution, is stored non-locally, on another machine either accessible through a wired connection, or over a network. In some embodiments, a read request from a client includes a byte range which the server then uses the mapping mechanism to look up the index based on time.

In some embodiments mapping the byte range to an index includes estimating the size of a virtual fragment by applying the ratio of size of a reference file and a target file with some overflow space. The estimated size may be supplied to the encoder. Optionally, when the file is transcoded by the encoder and the actual size is less than the estimated size, the dataset is padded. The estimation and padding may ensure compatibilities for exact size client requirements. Optionally, the server responds to a read request using a pull streaming protocol in order to transmit the video. Optionally, the server responds to a push streaming protocol in order to transmit the video rendition or segment. For example, the push streaming is MPEG2-TS over User Datagram Protocol (UDP) using Real Time Streaming Protocol (RTSP). In some embodiments, the server uses both a push and pull streaming protocols to transmit videos.

Some embodiments provide a lookahead, or prioritized segment transcoding operation. Optionally, manual and/or automatic prevention of playback delay may occur. For example, a storage server may receive a marked location such as a bookmark or a chapter. This bookmark, or otherwise annotated location may indicate a specific location, or a plurality of locations that a user will jump to. The bookmark may signal popular points to start streaming on a circular buffer recording. A resume location is one example of a common indicator that may be used on multiple systems. In this case, the storage system or video server may transcode offline or before a user playback requests, in the time range indicated by the bookmark. Optionally, if the requested segment was not transcoded offline, the encoder is instructed to operate in fast mode and reduce a frame rate and/or resolution for the requested segment. For example, a server may transmit bookmark locations of various users, while idle, and the storage system prepares the video segments around those times such that they do not need transcoding once requested. Optionally, the video server decides to return a stored fragment that does not match the requested rendition properties. For example, an overloaded server which gets a request for a 1080p resolution fragment replies with a fragment having 720p resolution which is already stored.

Optionally, the video server may utilize internal statistical and/or analytical mechanisms to predict whether a segment is requested to be played out of sequence. The storage system may instruct the encoder to optimize speed versus quality for randomly accessed segments. Optionally, the storage system may instruct the encoder to optimize quality versus speed for pre-fetch/read-ahead sequential segments. Optionally, the reduced quality fragments are marked as non-cacheable to a downstream caching network. Optionally, the out of sequence fragments get higher priority in the transcoder job queues and/or in the storage Input/Output queues. In some embodiments, the video server calculates which video portions (in time) are being more commonly accessed than other. Optionally, the system may see if certain video segments were read out of order in the context of a session using network file protocols such as Network File System (NFS)/Object Store. In some embodiments, an online and/or offline process may run for all or most video renditions within the statistics. In some embodiments, for certain renditions which are requested multiple times, the video server automatically transcodes the portions of the rendition which have been requested out of sequence. For example, certain segments of a movie or TV show may be very popular, such as highlights or the beginning or after commercial segments. For example, for a client side manifest which is dedicated to cellular/wireless data consumption in which the service provider anticipates the average bitrate available on its network, the system prepares a rendition in advance. Further, in this example, when the network infrastructure is upgraded, the operator drops this rendition and regenerates a different higher bitrate rendition, since the average bandwidth has improved. Optionally, statistics are gathered for a group of different content data sets that are the same on the pixel domain but different on the bitwise domain. For example, a private copy cloud storage where users upload the same video but the versions are encrypted differently.

Optionally, to reduce transcoding time, requested portions that need to be dynamically transcoded are broken down and processed in parallel. For example, a ten second video segment that is requested is broken down into one-second intervals and each interval encoded in parallel. Similarly a twenty-second or sixty-second interval, or any time between or greater may be used. Optionally, an interval with transcoding completed is streamed while transcoding continues in parallel on a subsequent in time fragment reducing latency. Optionally, the segmentation of the video being transcoded is adaptive on the storage server, and/or accounts for the normalized delivery time. Optionally, different storage nodes perform different tasks. For example, in some embodiments one node performs the segmentation, dispatching for transcode while another node does the data assembly, and yet another node sends the reply to a video server. In some embodiments, one node such as Storage System 120 does all previously mentioned tasks. Optionally, different storage nodes perform different tasks in parallel. Optionally, multiple nodes transcode in parallel. Optionally, multiple streaming servers are synchronized to the same stored data. Optionally, on a Distributed File system (DFS), a single file multiple writer capability is enabled.

In some embodiments, memory management algorithms are employed for video fragments on the video server. For example, a policy control such as provided by Control System 108, is imposed which dictates parameters and/or rules for which and when certain files and/or renditions should be maintained, and/or which deleted. Optionally, the policy control determines how much space is used in different circumstances. For example, the policy control determines that the least recently used files are erased, or the least used or the like. Optionally, the policy control determines that files which are a threshold days or hours old may be erased.

Optionally, the policy control determines that files of a certain size, or only so much storage space for certain videos are allowed. For example, for a less popular video, only 1 rendition in addition to the reference is stored, while 5 different renditions are stored for very popular films or videos. Optionally these possibilities are used and accessed via various Application Programming Interface's (API's).

Some embodiments of the present invention include system access via the API's for server administrators, or programmers to use to manipulate the video renditions and fragments. Some embodiments of the present invention include a data structure such as a table, map, an array, a hash table, a graph and/or the like to store and maintain information on the availability of video segments, renditions and/or clips.

Some embodiments of the invention include APIs that perform one or more actions. Optionally, an API is provided where the video server erases part of data of different renditions. Optionally, encoding decisions are stored where no auxiliary information is stored for them in next occurrence operations. Optionally, the video server erases metadata only. Optionally, the video server erases coefficient data only, not including the metadata. Optionally, the video server performs video regeneration. Optionally, the video server via an API, performs regeneration of a segment/fragment of a video or video data whereas it has been previously erased under control of the server. Optionally, the video server uses time stamp data, such as an indication or a control indicative of the period of time to store the video fragment. Optionally, time stamps indicate to erase the fragment after 2 days, 3 days, 5 days, or more and any intermediate period of time. For example, when an advertisement is added to a video fragment, there is a limited period of time scheduled for it to be added and/or used. Optionally, time stamps indicate to not erase the fragment. Optionally, the video server accesses an API to retrieve status and availability information via a data structure such as a hash table or map.

Optionally, the video server utilizes the API's independently, and/or combined to modify data within the data structure mentioned above. Optionally, the API's are accessed and/or managed by processes occurring automatically enclosed within the server. In some embodiments, the API's are used externally, provided to third party developers or remote system administrators.

Optionally, the video server performs batch transcoding by anticipating what video is played. Due to network congestions and interruptions in service, users frequently may jump from one quality level or rendition of video repeatedly. Therefore, optionally, the storage server performs a read ahead of the video for all renditions, and/or most renditions. The video server may, provide a list of all renditions that should be considered in the transcoding. Optionally the video server generates all renditions listed.

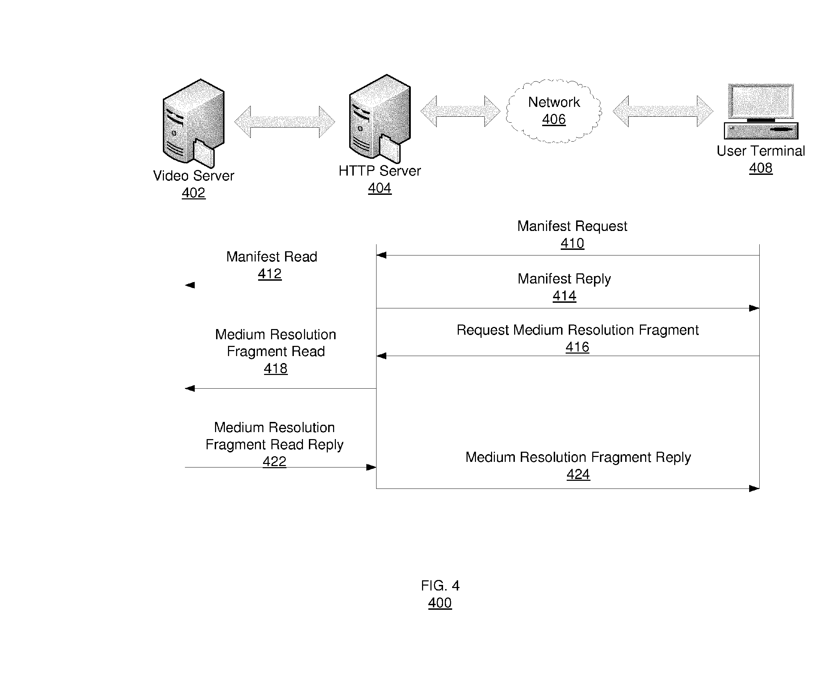

Reference is now made to FIG. 4, an exemplary application programming interface Flowchart 400 of a user request and video transmission according to prior inventions. In exemplary application programming interface Flowchart 400 User Terminal 408 may communicate with HTTP Server 404 via Network 406, which may subsequently communicate with Video Server 402. Optionally, Video Server 402 is a storage system such as Storage System 120. In System 400, User Terminal 408 submits a Manifest Request 410 to HTTP Server 404, which subsequently communicates with Video Server 402 and requests a Manifest Read 412. Sequentially, HTTP Server 404, transmits a Manifest Reply 414 to User Terminal 408.

User Terminal 408 then reviews the Manifest Reply 414 to determine which videos are available on Video Server 402. In System 400, User Terminal 408 may then Request Medium Resolution Fragment 416, to which HTTP Server 404 will request a read for the relevant medium resolution fragment via Medium Resolution Fragment Read 418. Video Server 402 then transmits Medium Resolution Fragment Read Reply 422 to HTTP Server 404 which then sends a Medium Resolution Fragment Reply, including the medium resolution file in 424. In prior art systems, the video file is requested and automatically transmitted since it is statically available.

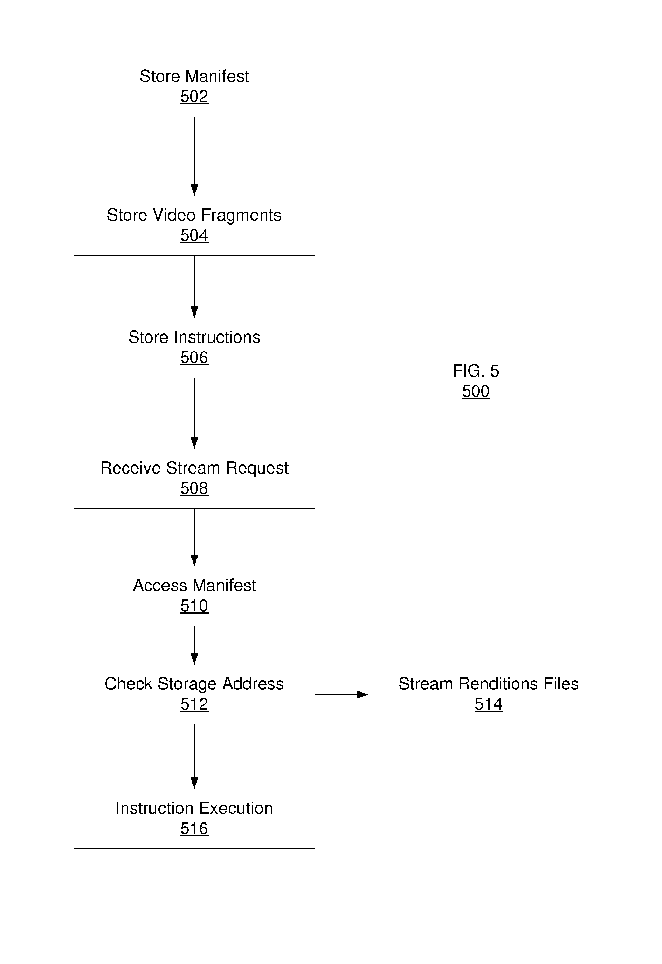

Reference is now made to FIG. 5, a Flowchart 500 of a method of dynamic real-time video fragment creation according to some embodiments of the present invention. As shown at 502 of Flowchart 500, a video server such as Video Server 102 may store a server side manifest file including mapping of several video fragments to storage locations and/or addresses in the storage of one or more storage nodes. The generation and management of the manifest is useful for management of multiple and/or a flexible amount of storage nodes. Additionally, the generation of the manifest is important for storing several renditions as well as fragments of a video file.

As shown at 504, the video server, such as Server 102 may store the respective video fragments in mapped storage addresses or locations. Now as shown in 506, video server may store instructions including encoding instructions and/or decisions in locations where the encoded fragments and/or renditions are not stored.

The video server stores a server-side manifest, which correlates video renditions of different resolutions and/or bitrates. The server may break a video down into time fragments for all and/or some of the renditions. This way a user terminal can request a specific time location which is enabled by the breakdown on the manifest.

Now as shown at 508, the video server such as Server 102, may receive a request to stream a specific rendition or fragment of a video file. As shown at 510, the video server may request or directly access the stored server side manifest in order to determine locations of the requested video fragments. As shown in 512-516, the video server may either directly stream the rendition files when they are present, as is shown in 514, or perform the instructions present in the storage location when they are present as is shown in 516.

The instructions stored, as in 516 may include information and/or parameters with a static as well as a dynamic section. The static section, may include bitrate budgets and/or resolution codec. The dynamic section may include speed and/or quality instructions. The video server, for example, chooses to select for the same fragment request, a different dynamic parameter which yields different fragment versions at different times.

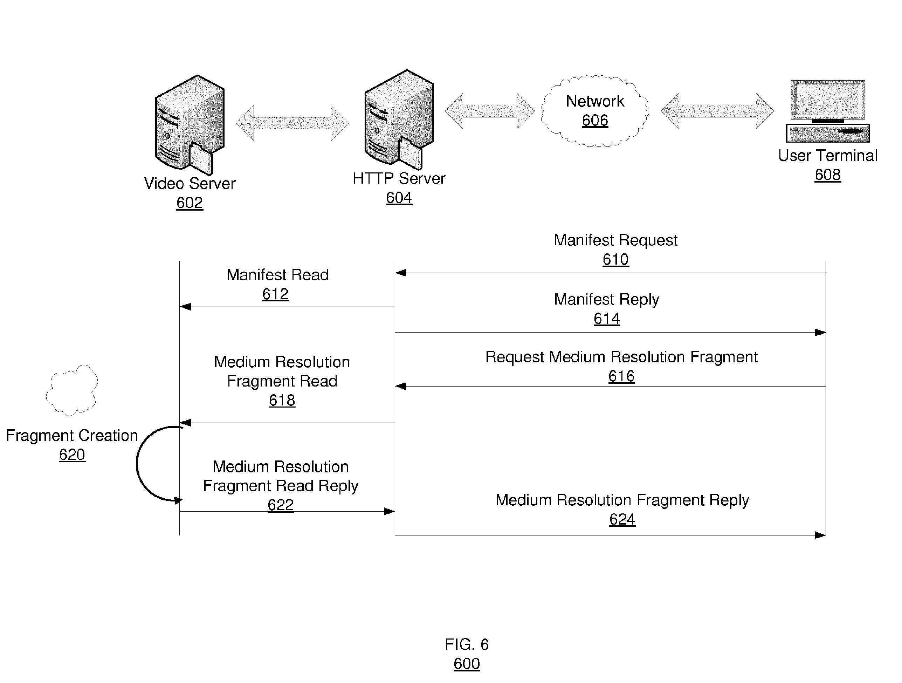

Reference is now made to FIG. 6, an exemplary application programming interface Flowchart 600 of a user request and video fragment creation according to some embodiments of the present invention. In exemplary application programming interface Flowchart 600 User Terminal 608 may communicate with HTTP Server 604 via Network 606, which may subsequently communicate with Video Server 602. In System 600, User Terminal 608 may submit a Manifest Request 610 to HTTP Server 604, which may subsequently communicate with Video Server 602 and request a Manifest Read 612. Sequentially, HTTP Server 604, in some embodiments may then transmit a Manifest Reply 614 to User Terminal 608.

User Terminal 608 may then review the Manifest Reply 614 to determine which videos and video renditions are available. In System 600, User Terminal 608 may then Request Medium Resolution Fragment 616, to which HTTP Server 604 will request a read for the relevant medium resolution fragment via Medium Resolution Fragment Read 618. In some embodiments of the present invention, Video Server 618 may generate the requested video fragment via Fragment Creation 620, dynamically via any procedures mentioned including those used in FIG's 2 and 5. Video Server 602 may then transmit Medium Resolution Fragment Read Reply 622 to HTTP Server 604 which may then send a Medium Resolution Fragment Reply, including the medium resolution file in 624.Certain parts of a video are usually accessed more frequently, such as the first few minutes of a movie or television (TV) show, after a commercial break and/or the like. Some embodiments of the invention include enabling fragments of these videos to be stored entirely, (in different formats or resolutions) and/or virtually as sets of instructions to be used for generating the segments. Optionally, a map listing which segments of the video is stored along with the reference file. Optionally, the most frequently viewed segments may be encoded and therefore listed as available.

In some embodiments, one or more fragments are stored on a remote storage location separate from the video server such as a cloud or tape storage. Optionally, the instructions are file protocol retrievals. In some embodiments, the virtual file includes reference to frames from the reference video. Optionally, the referenced frames are thumbnails of specific time locations in the reference video. Optionally, the references are to locations that correspond to video and/or audio attributes. Optionally, the video and/or audio attributes are motion pictures, facial areas, and/or Intraframes.

The methods as described above are used in the fabrication of integrated circuit chips.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems and methods will be developed and the scope of the term server, video server and storage node is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A method of processing video data, comprising:
during a preprocessing stage, for each of a plurality of video content datasets in a storage network node:
calculating accordingly coefficient data and encoding decisions of said video content dataset on a per frame basis, said encoding decisions comprising at least some of frame sizes, motion vectors, macroblock quantizers and macroblock layouts partitions (geometry);
deleting said coefficient data;
storing said encoding decisions in an auxiliary file associated with said video content dataset;
during an operative stage:
receiving from a client terminal via a communication network a request for streaming a first of said plurality of video content datasets;
identifying a respective said auxiliary file associated with said first video content dataset; and
utilizing said encoding decisions from said respective auxiliary file to recalculate said coefficient data of said first video content dataset without recalculating a respective said encoding decisions.

2. The method of claim 1, wherein said preprocessing stage further comprises creating a map detailing which video content datasets have coefficient data deleted, and storing said map in said auxiliary file.

3. The method of claim 2, wherein said operative stage further includes looking up a byte range in the map to locate a storage address of the requested video content dataset.

4. The method of claim 3, wherein said preprocessing stage further comprises, storing coefficient data for video content datasets which are at received time locations bookmarked by a user.

5. The method of claim 1, wherein said preprocessing stage further comprises, storing coefficient data for video content datasets which are determined to be likely to be played, the determination based on statistics gathered when at least one of: the video content dataset is requested to be played out of sequence and the video content dataset are different in a bitwise domain.

6. The method of claim 1, wherein recalculating said coefficient data step further comprises breaking down the video content datasets to smaller sets prior to recalculating said coefficient data and processing each smaller set in parallel, on a different storage node.

7. The method of claim 1, wherein said calculating further comprises transcoding the video content datasets to different video profiles, according to rules in a locally stored storage policy, said storage policy dictating which transcoded video content datasets should be stored and a storage period for said transcoded video content datasets which are to be stored.

8. The method of claim 1, wherein said identifying, further comprises:
creating an auxiliary file with encoding decisions supplied by an external encoder;
utilizing the encoding decisions supplied by the external encoder to recalculate the coefficient data of the first video content dataset without recalculating the respective encoding decisions; and
deleting said first video content dataset.

9. The method of claim 1, further comprising, compressing the auxiliary file, the auxiliary file containing encoding context information.

10. The method of claim 1, wherein the video content dataset is a group of pictures.

11. The method of claim 1, wherein the request is for a portion of the video.

12. A non-transitory computer readable medium comprising computer executable instructions adapted to perform a method of processing video data, according to claim 1.

13. A system to process video data comprising:
a server configured to:
during a preprocessing stage for each of a plurality of video content datasets in a storage network node:
calculate accordingly coefficient data and encode decisions of said video content dataset on a per frame basis, said encoding decisions comprising at least some of frame sizes, motion vectors, macroblock quantizers and macroblock layouts partitions (geometry);
delete said coefficient data; and
a storage device configured to:
store said encoding decisions in an auxiliary file associated with said video content dataset;
wherein during an operative stage said server:
receives from a client terminal via a communication network a request for streaming a first of said plurality of video content datasets;
identifies a respective said auxiliary file associated with said first video content dataset; and
utilizes said encoding decisions from said respective auxiliary file to recalculate said coefficient data of said first video content dataset without recalculating a respective said encoding decisions.
